# EUROPÄISCHE PATENTSCHRIFT

(11) **EP 0 888 493 B1**
(45) Veröffentlichungstag und Bekanntmachung des Hinweises auf die Patenterteilung: **29.03.2000**
(21) Anmeldenummer: 97908253.4
(22) Anmeldetag: 18.03.1997
(51) Int. Cl.: F01N 3/28

(54) **SCHALLDÄMPFER-ANORDNUNG**
EXHAUST SILENCER ARRANGEMENT
SYSTEME DE SILENCIEUX

(30) Priorität: 21.03.1996 DE 19611133
(43) Veröffentlichungstag der Anmeldung: 07.01.1999
(73) Patentinhaber: J. Eberspächer GmbH & Co., 73730 Esslingen (DE); MC Micro Compact Car Aktiengesellschaft, 2500 Biel 4 (CH)
(72) Erfinder: KEMPKA, Karl-Heinz, D-71277 Rutesheim (DE); NORDING, Thomas, D-73734 Esslingen (DE); STRÄTZ, Peter, D-71063 Sindelfingen (DE); WÖRNER, Siegfried, D-73734 Esslingen (DE)
(74) Vertreter: Socha, Peter
(86) Internationale Anmeldenummer: EP9701341
(87) Internationale Veröffentlichungsnummer: WO9735100

(56) Entgegenhaltungen:
- EP-A- 0 556 846
- EP-A- 0 563 882
- DE-A- 4 244 613
- DE-A- 4 427 459
- US-A- 4 894 987
- US-A- 5 376 341
- US-A- 5 392 602
- US-A- 5 426 269
- PATENT ABSTRACTS OF JAPAN vol. 018, no. 183 (M-1584), 29.März 1994 & JP 05 340234 A (KUBOTA CORP), 21.Dezember 1993,

## Beschreibung

Die Erfindung betrifft eine Schalldämpfer-Anordnung mit Schalldämpfer in Mehrkammerbauweise, insbesondere für Personenkraftfahrzeuge, mit einem aus zwei Halbschalen zusammengesetzten Gehäuse, in welchem ein Katalysatormodul integriert aufgenommen ist.

Eine Abgasanlage eines Kraftfahrzeuges hat bekanntermaßen die Aufgabe, die bei der Verbrennung des Frischgemisches im Motor entstehenden Abgase mit geringem Strömungswiderstand abzuleiten und an einer bestimmten Stelle des Fahrzeuges austreten zu lassen, die vielfach durch Gesetz vorgeschrieben ist. Für einen geräuscharmen Austritt der Abgase in die Atmosphäre besitzt die Abgasanlage eine Schalldämpfer-Anordnung, für einen schadstoffarmen Austritt der Abgase vielfach ein Abgasreinigungsgerät, einen sogenannten Katalysator. Der Katalysator tritt bei einer derart kombinierten bekannten Anlage im Abgasstrang zumeist an die Stelle des Vorschalldämpfers der Schalldämpferanordnung und ist dem Nachschalldämpfer, gegebenenfalls auch dem Mittelschalldämpfer, vorgeordnet.

Wesentliche Bestandteile eines Katalysators sind bekanntermaßen der Katalysatorträger mit seiner Edelmetallbeschichtung, vorzugsweise ein Monolith, und sein Gehäuse. Ein- und Ausgangstrichter können vorgesehen sein.

Bei den Schalldämpfer-Anordnungen unterscheidet man prinzipiell zwischen Reflexions- und Absorptionsdämpfern. Beide Bauprinzipien können auch zu einem Schalldämpfer kombiniert werden. Aufbau und Wirkungsweise sind grundsätzlich bekannt.

Der Erfindung liegt die Aufgabe zugrunde, eine Schalldämpfer-Anordnung der eingangs genannten Art zu schaffen, welche einfach aufgebaut ist, wirkungvoll betrieben werden kann und insbesondere für sehr kleine Kraftfahrzeuge mit 3-Zylinder-Motor geeignet ist.

Gelöst wird die Aufgabe durch eine Schalldämpfer-Anordnung der im Patentanspruch 1 angegebenen Art.

Vorteilhaft weitergebildet wird die Schalldämpfer-Anordnung durch die Merkmale nach den Ansprüchen 2 bis 29.

Erfindungsgemäß ist vorgesehen, daß das mit einer einseitig offenen Ausströmungsseite in das Schalldämpfergehäuse versehene Katalysatormodul einen Schalldämpfer-Systemtrennboden bildet und das Halbschalengehäuse in eine Hauptkammer und eine Zusatzkammer in Form einer Resonatorkammer bzw. eines Helmholtz-Resonators unterteilt, wobei die Kammern über zumindest einen in das Halbschalengehäuse eingeformten Verbindungskanal miteinander verbunden sind. Die Zusatzkammer ist ein Leerraum zur Volumenvergrößerung, welcher mit der Hauptkammer kommuniziert.

Zwar ist aus US-PS 4 894 987 eine eingangs genannte Schalldämpfer-Anordnung mit integriertem Katalysatormodul bekannt. Der Schalldämpfer-Systemtrennboden wird jedoch nicht durch das Katalysatormodul gebildet, sondern durch separate interne axiale Platten, welche einen axialen Trennboden ausbilden, während der erfindungsgemäße Systremtrenndoen radial verläuft.

Ein einfacher Aufbau und eine zweckmäßige Montage ist gegeben, wenn der Katalysatormodul im Halbschalengehäuse durch Formschluß und/oder durch Verschweißung befestigt ist.

Der Querschnitt des Halbschalengehäuses längs des Katalysatormoduls ist zweckmäßigerweise im wesentlichen gleich. Mithin sind je nach Wunsch bzw. Fahrzeugtyp im Querschnitt gleiche Katalysatormodule mit unterschiedlicher Monolithlänge in das Halbschalengehäuse formschlüssig einsetzbar (module Bauweise des Katalysators - wie auch die anderen nachfolgend noch beschriebenen Einzelteile der Schalldämpfer-Anordnung module Bauteile sein können, nämlich der Innenaufbau des Schalldämpfers und das Gehäuse).

Bevorzugt besitzt das Katalysatormodul auf der Seite der Zusatzkammer einen schrägen Einlaßtrichter und auf der Seite der Hauptkammer eine offene, d.h. trichterlose Auslaßströmung. Durch die Schräganströmung ergibt sich eine optimale Strömungsverteilung mit dem Vorteil einer sehr kurzen Anspringzeit des Katalysators sowie eine gute Langzeitstabilität der Katalysatorbeschichtung. Durch die offene Katalysator-Ausströmung ohne Auslaßtrichter entsteht im Betrieb nur ein geringer Abgasgegendruck und damit ein nur minimaler Leistungsverlust, was insbesondere wichtig für Motoren mit Abgasturbolader ist.

Der schräge Einlaßtrichter erstreckt sich mit Vorteil durch eine Mantelöffnung des Halbschalengehäuses und ist in dieser Mantelöffnung abdichtend zumindest in Axial- bzw. Längsrichtung des Halbschalengehäuses fixiert, insbesondere verschweißt.

Der schräge Einlaßtrichter weist bevorzugt ein kurzes, vorzugsweise gekrümmtes Anschlußrohrstück auf, welches mit einem Abgasturbolader oder direkt mit einem Motor, insbesondere Heckmotor, verbunden werden kann.

Der Monolithmantel des Katalysatormoduls besitzt für eine Lagerung im Halbschalengehäuse eine Umfangsisolation, während der schräge Einlauftrichter ohne zusätzliche Isolationsschicht ausgebildet ist und gleichwohl ein wirkungsvoller Betrieb des Katalysatormoduls möglich ist.

Die langgestreckte, im wesentlichen über die Länge den gleichen Querschnitt aufweisende Hauptkammer ist in besonderer Ausgestaltung der Erfindung als 3-Kammer-Topf (d.h. die mit dem Katalysator kombinierte Schalldämpfer-Anordnung zusammen mit der Helmholtz-Zusatzkammer als 4-Kammer-Topf) ausgeführt und als solche durch zwei voneinander beabstandete Zwischenböden in drei Einzelkammern unterteilt, wobei in Axial- bzw. Längsrichtung der Hauptkammer die erste Einzelkammer zwischen dem Katalysatormodul und dem ersten Zwischenboden, die zweite Einzelkammer zwischen dem ersten Zwischenboden und dem zweiten Zwischenboden und die dritte Einzelkammer zwischen dem zweiten Zwischenboden und einem stirnseitigen Ende des Halbschalengehäuses sich erstreckt.

In besonders zweckmäßiger Erfindungsvariante ist die erste Einzelkammer an ein schalldämpferinneres Auslaßrohr angeschlossen, welches sich durch die zweite Einzelkammer, die dritte Einzelkammer und das zugeordnete stirnseitige Ende des Halbschalengehäuses nach außen erstreckt, wobei sich das Auslaßrohr im Innern des Halbschalengehäuses im wesentlichen parallel zur Längsachse des Halbschalengehäuses oder alternativ unter einem Neigungswinkel zur Längsachse des Halbschalengehäuses erstrecken kann.

Das Auslaßrohr besitzt im Bereich der zweiten Einzelkammer bevorzugt erste mantelseitige Durchgangsöffnungen und im Bereich der dritten Einzelkammer zweite mantelseitige Durchgangsöffnungen, wobei die zweiten mantelseitigen Durchgangsöffnungen außenseitig mit einer Umfangsisolation versehen sein können.

Erste und zweite Einzelkammer sind bei einer Ausführungsvariante der Erfindung grundsätzlich als Reflexionskammern ausgebildet, wobei die erste Einzelkammer auch eine Resonatorkammer nach Art der Zusatzkammer sein kann.

Die dritte Einzelkammer kann als reine Absorptionskammer ausgebildet und außerhalb des Auslaßrohrs mit einem Schallschluckstoff ausgefüllt sein. Sie kann aber auch, wie nachfolgend noch im einzelnen beschrieben, eine reine Reflexionskammer oder aber ein Reflexionskammer sein, welche ein sogenanntes Absorptionspaket enthält, also eine kombinierte Absorptions-/Reflexionskammer.

Die zweite Einzelkammer besitzt zweckmäßigerweise, wie sich dies empirisch durch Versuch ergeben hat, eine größere Längserstreckung als die dritte Einzelkammer.

Bei Ausbildung der dritten Einzelkammer als Reflexionskammer haben vorteilhafterweise die ersten mantelseitigen Durchgangsöffnungen einen größeren Durchmesser als die zweiten mantelseitigen Durchgangsöffnungen, die bevorzugt einen runden Querschnitt besitzen.

Die stirnseitige Einströmöffnung des Ausgangsrohrs liegt mit Vorzug im Bereich des ersten Zwischenbodens und weist bei Ausbildung der dritten Einzelkammer als Absorptionskammer eine sich verjüngende Einströmdrossel auf.

Hierbei ist zweckmäßigerweise der erste Zwischenboden perforiert ausgebildet, welcher auch unperforiert sein kann, insbesondere dann, wenn die dritte Einzelkammer als reine Reflexionskammer oder als Reflexionskammer mit einem Absorptionspaket ausgebildet ist.

Ist die dritte Einzelkammer als Reflexionskammer ausgebildet, umfaßt diese, wie bereits angesprochen, im Außenumfangsbereich der zweiten mantelseitigen Durchgangsöffnungen ein Absorptionspaket bevorzugt mit einem koaxial zum Ausgangsrohr verlaufenden, beabstandeten Überrohr, wobei zwischen Überrohr und Ausgangsrohr eine Umfangsisolierung vorgesehen ist.

Das Überrohr kann Perforationen aufweisen, und es ist bevorzugt die erste Einzelkammer mit der dritten kombinierten Absorptions-/Reflexions-Einzelkammer über ein schalldämpferinneres Zusatzrohr ("Bypass") verbunden, welches sich durch die zweite Einzelkammer erstreckt. Mithin sind dritte und erste Einzelkammer über ein Rohrglied zusätzlich angebunden, was trotz kompakter Bauweise der gesamten Schalldämpfer-Anordnung große "wirksame Dämpfungslängen" schafft, insbesondere durch die weitere Ankopplung der Helmhotz-Zusatzkammer über das weitere "Rohrglied" in Form des mantelseitigen Überströmkanals parallel zum Katalysatormodul.

Das Auslaßrohr weist bevorzugt im Bereich der zweiten Einzelkammer eine Querschnittsverjüngung mit stetigen Übergängen auf. Hierbei sind die ersten und zweiten mantelseitigen Durchgangsöffnungen zweckmäßigerweise als Langlochbohrungen ausgebildet. Die ersten mantelseitigen Durchgangsöffnungen befinden sich beidseits der vorgenannten Querschnittsverjüngung, bezogen auf die Axialerstreckung des Schalldämpfers.

Zur Reduzierung von Körperschall besitzt das Halbschalengehäuse zweckmäßig Stabilisierungseinbuchtungen, welche bevorzugt praktisch über den gesamten Umfang parallel zu den Zwischenböden verlaufen können.

Auch sind lokale Stabilisierungseinbuchtungen denkbar, insbesondere an Stellen, an denen mantelaußenseitig andere Konstruktionseinzelteile Platz finden sollen, wenn die Schalldämpfer-Anordung in einem Kraftfahrzeug montiert ist, z.B. eine lokale Einbuchtung für ein mantelnahes Achslager des Fahrzeugs.

Die Schalldämpfer-Anordnung ist insbesondere dann von Vorteil, wenn sie sich bzw. das Halbschalengehäuse im fahrzeugmontierten Zustand quererstreckt, im besonderen praktisch über die gesamte Breite eines Klein-Kraftfahrzeuges, eines sogenannten Micro-Compact-Car, und zwar in rohrkurzer Ankopplung an einen benachbarten Heckmotor des Fahrzeuges unter Zwischenanordnung eines Abgasturboladers.

Es sei erwähnt, daß das Katalysatormodul im Halbschalengehäuse auch seitenverkehrt angeordnet sein kann, d.h. auf der Seite der Hauptkammer den schrägen Einlauftrichter und auf der Seite der Zusatzkammer die offene, trichterlose Ausströmungsseite aufweist. In diesem Fall wird die Zusatzkammer im Betrieb vom Abgas durchströmt, bevor dieses über den oder die mantelseitigen gehäuseintegrierten Verbindungskanäle zur Hauptkammer strömt.

Im folgenden werden die wesentlichen Funktionsmerkmale nochmals zusammengestellt:
- Der Katalysator/Schalldämpfer ist in einer einzigen Baueinheit direkt nach einem Abgasturbolader mit minimaler Vorrohrlänge vorgesehen.
- Das Katalysatormodul mit variabler Monolithlänge ist als eigenständige Fertigungseinheit im Schalldämpfer-Halbschalengehäuse integriert, verbunden entweder durch Schweißung oder durch Formschluß.
- Der in der Schalldämpferschale eingesetzte Katalysatorkörper teilt das Schalldämpfervolumen in eine Resonator-bzw. Helmholtzkammer und eine Hauptkammer und übernimmt so die Zusatzfunktion als Systemtrennboden.
- Das Katalysatormodul hat eine einseitig offene Ausströmung in das Schalldämpfergehäuse, wobei der nachfolgende Schalldämpferfunktionsaufbau in Reflexions-/Absorptions-Bauweise ausgebildet ist.
- Die Resonatorkammer und die Hauptkammer sind durch einen oder mehrere in das Halbschalengehäuse eingeformten Überströmkanal miteinander verkoppelt.
- Die Schalldämpfer-Hauptkammer ist als 3-Kammer-Reflexions-/Absorptions-System mit integrierter Ausgangsbrause und einer Überströmdrossel im Zwischenboden ausgebildet.
- Die Schalldämpfer-Hauptkammer ist alternativ als 3-Kammer-Reflexionssystem mit am Ausgangsrohr aufgesetztem Absorptionspaket und einer Überströmdrossel und zusätzlichem Bypassrohr ausgebildet.
- Das Absorptionspaket ist über ein perforiertes Überrohr zusätzlich an die dritte Einzelkammer bzw. Endkammer ange koppelt.

Die wesentlichen Vorteile des erfindungsgemäßen Systems sind zusammengefaßt wie folgt:
- Durch die Anordnung des Katalysatormoduls im Schalldämpfergehäuse und eine optimale Strömungsverteilung infolge der Schräganströmung werden eine sehr kurze Anspringzeit des Katalysators und eine gute Langzeitstabilität der Katalysatorbeschichtung erreicht.
- Durch die offene Katalysator-Ausströmung in das Schalldämpfergehäuse ergibt sich ein geringer Abgasgegendruck und damit ein minimaler Leistungsverlust des Motors, insbesondere bei Vorhandensein eines Abgasturboladers.
- Durch die Integration des kompletten Katalysatormoduls in das Schalldämpfergehäuse wird die Körperschallabstrahlung wesentlich verringert. Außerdem kann auf die Isolation des Katalysator-Eingangstrichters verzichtet werden.
- Durch die Unterteilung des Systems in verschiedene Fertigungsmodule (Katalysator/Schalldämpfer-Innenaufbau/Gehäuse) ist eine rationelle und kostensparende Fertigung möglich.
- Wesentliche Gewichtseinsparung durch die Kombination der einzelnen Fertigungsmodule in Multifunkton zu einer Funktionseinheit.

Die Erfindung wird nachfolgend anhand von Ausführungsbeispielen unter Bezugnahme auf die beigefügte Zeichnung näher beschrieben; es zeigen:
- Fig. 1: eine Schalldämpfer-Anordnung mit integriertem Katalysatormodul schematisch in einem horizontalen Längsschnitt,
- Fig. 2: einen schematischen Querschnitt durch die Schalldämpfer-Anordnung nach Fig. 1 längs der Linie A-A,
- Fig. 3: die Schalldämpfer-Anordnung nach Fig. 1 in einer Seitenansicht, und
- Fig. 4: eine Schalldämpfer-Anordnung ähnlich Fig. 1 in anderer Ausführungsvariante.

Gemäß Zeichnung umfaßt eine Schalldämpfer-Anordnung einen Schalldämpfer 1 in Mehrkammerbauweise, welcher in einem Personenkraftfahrzeug der Mikroklasse mit einem 3-Zylinder-Heckmotor vorgesehen ist, dessen Abgasausgang an einen Abgasturbolader und dessen Ausgang mit kurzer Verrohrung an die veranschaulichte Schalldämpfer-Anordnung angeschlossen ist. Die Schalldämpfer-Anordnung liegt hierbei quer zum Fahrzeug und erstreckt sich horizontal praktisch über die gesamte Breite des Kleinkraftfahrzeuges.

Das Gehäuse 4 des Schalldämpfers 1 ist langestreckt und besitzt über seine gesamte Länge praktisch den gleichen ovalen Grundquerschnitt. Es besteht aus einer oberen Halbschale 2 und einer unteren Halbschale 3, welches Blechformteile sind. Die beiden Halbschalen 2, 3 sind über eine Falz 36 durch Formschluß gasabdichtend miteinander verbunden.

Im Halbschalengehäuse 4 ist ein gehäuseloses Katalysatormodul 5 aufgenommen, insbesondere formschlüssig und im Grundsatz axialverschieblich längs des Monolithumfangs des Katalysatormoduls 5, wobei der Monolith für eine Lagerung eine Umfangsisolation 15 aufweist.

Das Katalysatormodul 5 ist im zusammengesetzten Zustand jedoch axialfixiert im Gehäuse, und zwar durch dessen Einlaßtrichter 11, der eine Schräganströmung des Monoliths und mithin eine optimale Strömungsverteilung im Katalysator erlaubt. Hierbei erstreckt sich der schräge umfangsmäßig nicht isolierte Einlaßtrichter 11 durch eine formangepaßte Mantelöffnung 13 im Halbschalengehäuse 4. Der Trichter ist an der Mantelöffnung 13 gasabdichtend verschweißt.

Der Trichter 11 geht schalldämpferaußenseitig in ein kurzes gekrümmtes Anschlußrohrstück 14 über, dessen freies Ende mit einem Kugelflansch 34 versehen ist. Der Kugelflansch besitzt Kopfschrauben 35 für einen Anschluß der Schalldämpfer-Anordnung an einen Abgasturbolader.

An der oberen Halbschale 2 des Halbschalengehäuses 4 ist ferner an anderer bezüglich des Anschlußrohrstücks 14 entfernter Stelle ein Vertikalhalter 32 angeschweißt, der mittels Schrauben 33 am Fahrzeugrahmen befestigt werden kann, um insgesamt die Schalldämpfer-Anordnung stabil unter dem Fahrzeugboden zu befestigen.

Das Katalysatormodul 5 weist auf der dem Einlaßtrichter 13 abgewandten Seite ein offene, d.h. trichterlose Ausströmungsseite 12, so daß im Betrieb ein geringer Abgasgegendruck gegeben ist.

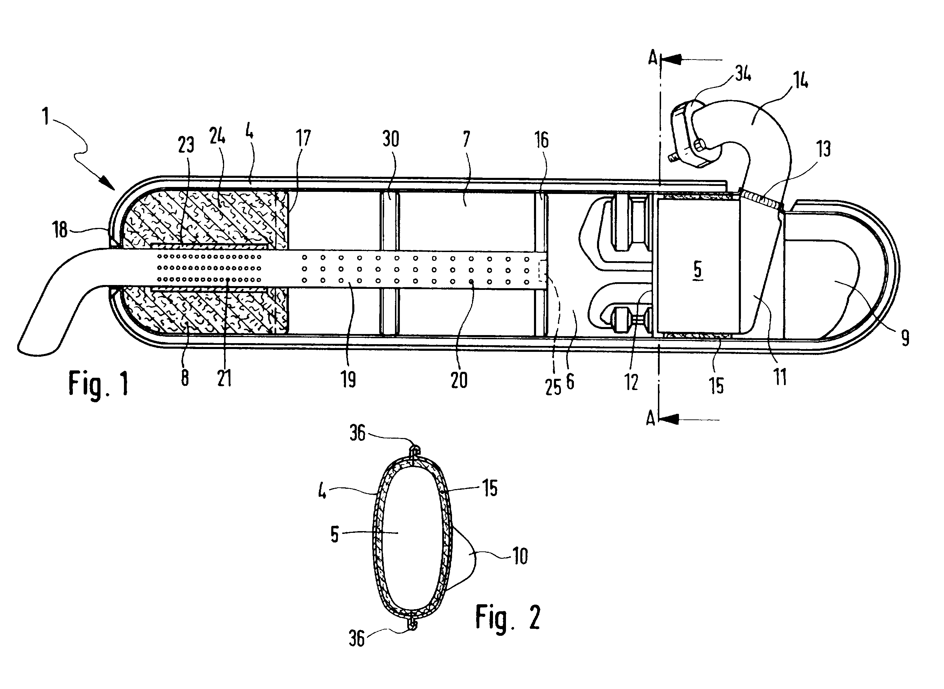

Vorgenannte Anordnung des Katalysatormoduls 5 im Halbschalengehäuse 4 der Schalldämpfer-Anordnung ist so getroffen, daß das Katalysatormodul 5 einen Schalldämpfer-Systemtrennboden ausbildet und das Halbschalengehäuse 4 in eine gemäß Figur 1 links vom Katalysator gelegene Hauptkammer und in eine auf der anderen Seite gelegene Zusatzkammer 9 unterteilt, wobei die Kammern über zumindest einen in das Halbschalengehäuse 4 eingeformten Verbindungskanal 10 miteinander verbunden sind, wie dies insbesondere der Figur 2 zu entnehmen ist.

Die Zusatzkammer 9 ist ein Leerraum zur Volumenvergrößerung und als solche eine Resonatorkammer bzw. ein Helmholtz-Resonator, welcher mit der Hauptkammer kommuniziert.

Das Katalysatormodul 5 ist so angeordnet, daß dessen offene Ausströmungsseite 12 in Richtung Hauptkammer weist.

Die langgestreckte, im wesentlichen über die Länge den gleichen Querschnitt aufweisende Hauptkammer ist gemäß Zeichnung als 3-Kammer-Topf (d.h. die mit dem Katalysator kombinierte Schalldämpfer-Anordnung zusammen mit der Helmholtz-Zusatzkammer als 4-Kammer-Topf) ausgeführt und als solche durch zwei voneinander beabstandete Zwischenböden 16, 17 in drei Einzelkammern 6, 7, 8 unterteilt, wobei in Axial- bzw. Längsrichtung der Hauptkammer die erste Einzelkammer 6 zwischen dem Katalysatormodul 5 und dem ersten Zwischenboden 16, die zweite Einzelkammer 7 zwischen dem ersten Zwischenboden 16 und dem zweiten Zwischenboden 17 und die dritte Einzelkammer 8 zwischen dem zweiten Zwischenboden 17 und dem gemäß den Figuren 1, 3 und 4 linken stirnseitigen Ende 18 des Halbschalengehäuses 4 sich erstreckt.

Die erste Einzelkammer 6 ist an ein schalldämpferinneres Auslaßrohr 19 angeschlossen, welches im Schalldämpferinnern geradlinig ausgebildet ist und sich gemäß Figur 1 axial durch die zweite Einzelkammer 7, die dritte Einzelkammer 4 und von dort durch das zugeordnete stirnseitige Ende 18 des Halbschalengehäuses 4 nach außen erstreckt und im Außenbereich als Endrohr der Abgasanlage abgekrümmt ist.

Das Auslaßrohr 19 besitzt im Bereich der zweiten Einzelkammer 7 erste mantelseitige Durchgangsöffnungen 20 und im Bereich der dritten Einzelkammer 8 zweite mantelseitige Durchgangsöffnungen 21, wobei gemäß Ausführungsbeispiel nach den Figuren 1 bis 3 die zweiten mantelseitigen Durchgangsöffnungen 21 außenseitig mit einer Umfangsisolation 23 versehen sind. Die dritte Einzelkammer 8 ist insgesamt außerhalb des Auslaßrohrs 19 mit einem Schallschluckstoff 24 ausgefüllt, d.h. es ist die dritte Einzelkammer 8 ist als Absorptionskammer ausgebildet.

Die ersten mantelseitigen runden Durchgangsöffnungen 20 weisen einen größeren Durchmesser als die zweiten mantelseitigen runden Durchgangsöffnungen 21 auf.

Der Raum zwischen Halbschalengehäuse 4 und Auslaßrohr 19 im Bereich der zweiten Einzelkammer 7 ist ein Leerraum. Die zweite Einzelkammer 7 ist mithin als Reflexionskammer ausgebildet.

Die stirnseitige Einströmöffnung des Ausgangsrohrs 19 verläuft bündig mit dem ersten Zwischenboden 16 und weist eine zentrale, sich verjüngende Einströmdrossel 25 auf.

Der erste Zwischenboden 16 gemäß Figur 1 ist perforiert.

Zur Reduzierung von Körperschall besitzt das Halbschalengehäuse 4 Stabilisierungseinbuchtungen 30, welche bevorzugt praktisch über den gesamten Umfang parallel zu den Zwischenböden verlaufen.

Auch sind lokale Stabilisierungseinbuchtungen 31, 30' vorhanden, insbesondere an Stellen, an denen mantelaußenseitig andere Konstruktionseinzelteile Platz finden, z.B. ein mantelnahes Achslager eines Kraftfahrzeuges.

Die lokalen Stabilitätseinbuchtungen 31 befinden sich im Bereich der zweiten Einzelkammer 7, während die lokalen Stabilisierungseinbuchtungen 30' im Bereich der ersten Einzelkammer 6 vorgesehen sind und bevorzugt im Verbindungkanal 10 bzw. Überströmkanal zur Zusatzkammer 9 liegen.

Mithin wird gemäß den Figuren 1 bis 3 ein 4-Kammer-Topf mit einer Absorptionskammer (dritte Einzelkammer 8), zwei Reflexionskammern (erste und zweite Einzelkammer 6, 7) und eine Resonatorkammer (Zusatzkammer 9) geschaffen, wobei ein gehäuseloser Katalysatormodul 5 formintegriert zwischen der Zusatzkammer 9 und der ersten Einzelkammer 6 als Trennboden angeordnet ist. Das Katalysatormodul liegt hierbei im Bereich des Strömungseingangs der Schalldämpfer-Anordnung. Die in das Katalysatormodul eingeleiteten Abgase des Motors sind noch vergleichsweise heiß.

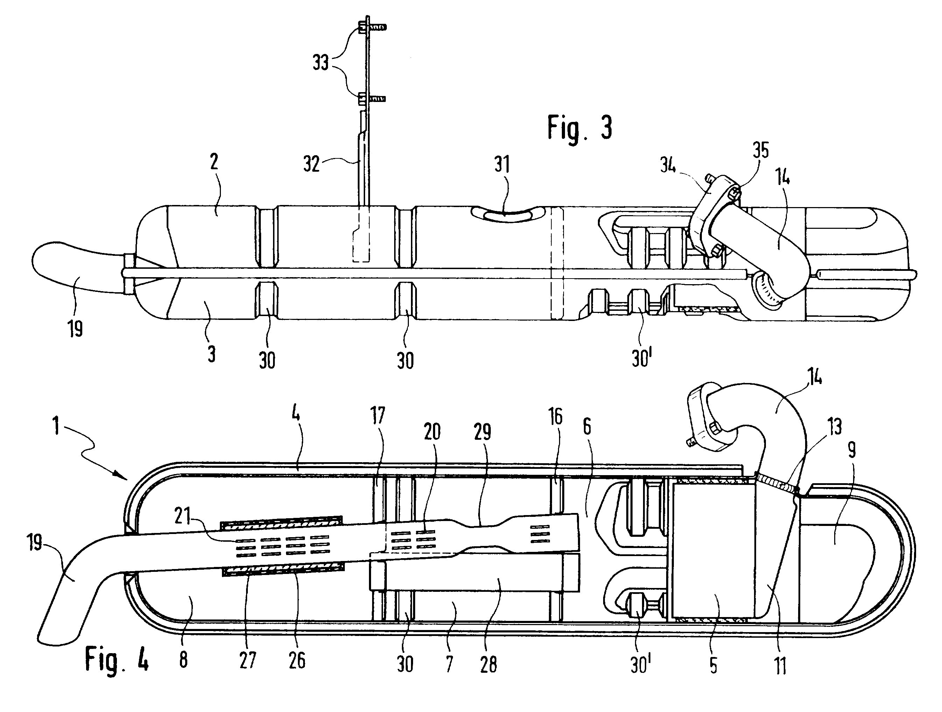

Das Ausführungsbeispiel nach Figur 4 entspricht im Grundsatz demjenigen nach den Figuren 1 bis 3. Jedoch ist die dritte Einzelkammer 8 als kombinierte Absorptions-/Reflexionskammer ausgebildet.

Im besonderen ist das Auslaßrohr 19 im Bereich der zweiten mantelseitigen Durchgangsöffnungen 21 mit einem Absorptionspaket ausgestattet, welches die Durchgangsöffnungen 21 überdeckt. Das Absorptionspaket besteht aus einem das Auslaßrohr konzentrisch mit Abstand umschließenden perforierten überrohr 26 und einer eingebetteten Umfangsisolierung 27.

Die erste Einzelkammer 6 ist mit der dritten kombinierten Absorptions-/Reflexions-Einzelkammer 8 über ein schalldämpferinneres achsparalleles Zusatzrohr 28 ("Bypass") verbunden, welches sich durch die zweite Einzelkammer 7 erstreckt.

Das Auslaßrohr 19, welches bezüglich der Längsachse der Schalldämpfer-Anordnung schräg angeordnet ist, weist im Bereich der zweiten Einzelkammer 7 eine Querschnittsverjüngung 29 mit stetigen Übergängen auf.

Die ersten und zweiten mantelseitigen Durchgangsöffnungen 20, 21 sind als Langlochbohrungen ausgebildet. Erstgenannte Öffnungen 20 verlaufen beidseits der vorgenannten Querschnittsverjüngung 29, bezogen auf die Axialerstreckung des Schalldämpfers.

Zusatzrohr 28 und Auslaßrohr 19 ragen mit einer kurzen Rohrlänge in die erste Einzelkammer 6.

## Patentansprüche

1. Schalldämpfer-Anordnung mit Schalldämpfer (1) in Mehrkammerbauweise, insbesondere für Personenkraftfahrzeuge, mit einem aus zwei Halbschalen (2, 3) zusammengesetzten Gehäuse (4), in welchem ein Katalysatormodul (5) integriert aufgenommen ist,
dadurch gekennzeichnet,
daß das mit einer einseitig offenen Ausströmungsseite in das Schalldämpfergehäuse versehene Katalysatormodul (5) einen Schalldämpfer-Systemtrennboden bildet und das Halbschalengehäuse (4) in eine Hauptkammer (6, 7, 8) und eine Zusatzkammer (9) in Form einer Resonatorkammer bzw. eines Helmholtz-Resonators unterteilt, wobei die Kammern über zumindest einen in das Halbschalengehäuse (4) eingeformten Verbindungskanal (10) miteinander verbunden sind.

2. Schalldämpfer-Anordnung nach Anspruch 1,
dadurch gekennzeichnet,
daß das Katalysatormodul (5) im Halbschalengehäuse (4) durch Formschluß und/oder durch Verschweißung befestigt ist.

3. Schalldämpfer-Anordnung nach Anspruch 1 oder 2,
dadurch gekennzeichnet,
daß der Querschnitt des Halbschalengehäuses (4) längs des Katalysatormoduls (5) im wesentlichen gleich ist, wobei im Querschnitt gleiche Katalysatormodule mit unterschiedlicher Monolithlänge in das Halbschalengehäuse (4) formschlüssig einsetzbar sind.

4. Schalldämpfer-Anordnung nach einem der Ansprüche 1 bis 3,
dadurch gekennzeichnet,
daß das Katalysatormodul (5) auf der Seite der Zusatzkammer (9) einen schrägen Einlaßtrichter (11) und auf der Seite der Hauptkammer (6, 7, 8) eine offene, d.h. trichterlose Auslaßströmungsseite (12) aufweist.

5. Schalldämpfer-Anordnung nach Anspruch 4,
dadurch gekennzeichnet,
daß der schräge Einlaßtrichter (11) sich durch eine Mantelöffnung (13) des Halbschalengehäuses (4) erstreckt und in dieser Mantelöffnung (13) abdichtend fixiert ist.

6. Schalldämpfer-Anordnung nach Anspruch 5,
dadurch gekennzeichnet,
daß der schräge Einlaßtrichter (11) ein kurzes vorzugsweise gekrümmtes Anschlußrohrstück (14) aufweist, welches mit einem Abgasturbolader oder direkt mit einem Motor, insbesondere Heckmotor, verbunden werden kann.

7. Schalldämpfer-Anordnung nach einem der Ansprüche 4 bis 6,
dadurch gekennzeichnet,
daß der Monolithmantel des Katalysatormoduls (5) für eine Lagerung im Halbschalengehäuse (4) eine Umfangsisolation (15) aufweist, während der schräge Einlaßtrichter (11) ohne zusätzliche Isolationsschicht ausgebildet ist.

8. Schalldämpfer-Anordnung nach einem der Ansprüche 1 bis 7,
dadurch gekennzeichnet,
daß die langgestreckte, im wesentlichen den gleichen Querschnitt aufweisende Hauptkammer durch zwei voneinander beabstandete Zwischenböden (16, 17) in drei Einzelkammern (6, 7, 8) unterteilt ist, wobei in Axial-bzw. Längsrichtung der Hauptkammer die erste Einzelkammer (6) zwischen dem Katalysatormodul (5) und dem ersten Zwischenboden (16), die zweite Einzelkammer (7) zwischen dem ersten Zwischenboden (16) und dem zweiten Zwischenboden (17) und die dritte Einzelkammer (8) zwischen dem zweiten Zwischenboden (17) und einem stirnseitigen Ende (18) des Halbschalengehäuses (4) sich erstreckt.

9. Schalldämpfer-Anordnung nach Anspruch 8,
dadurch gekennzeichnet,
daß die erste Einzelkammer (6) an ein schalldämpferinneres Auslaßrohr (19) angeschlossen ist, welches sich durch die zweite Einzelkammer (7), die dritte Einzelkammer (8) und das zugeordnete stirnseitige Ende (18) des Halbschalengehäuses (4) nach außen erstreckt.

10. Schalldämpfer-Anordnung nach Anspruch 9,
dadurch gekennzeichnet,
daß sich das Auslaßrohr (19) im Innern des Halbschalengehäuses (4) im wesentlichen parallel zur Längsachse des Halbschalengehäuses erstreckt.

11. Schalldämpfer-Anordnung nach Anspruch 9,
dadurch gekennzeichnet,
daß sich das Auslaßrohr (19) im Innern des Halbschalengehäuses (4) unter einem Neigungswinkel zur Längsachse des Halbschalengehäuses erstreckt.

12. Schalldämpfer-Anordnung nach einem der Ansprüche 9 bis 11,
dadurch gekennzeichnet,
daß das Auslaßrohr (19) im Bereich der zweiten Einzelkammer (7) erste mantelseitige Durchgangsöffnungen (20) und im Bereich der dritten Einzelkammer (8) zweite mantelseitige Durchgangsöffnungen (21) aufweist.

13. Schalldämpfer-Anordnung nach Anspruch 12,
dadurch gekennzeichnet,
daß die zweiten mantelseitigen Durchgangsöffnungen (21) außenseitig mit einer Umfangsisolation (23) versehen sind.

14. Schalldämpfer-Anordnung nach einem der Ansprüche 1 bis 13,
dadurch gekennzeichnet,
daß die erste und die zweite Einzelkammer (6, 7) als Reflexionskammern ausgebildet sind.

15. Schalldämpfer-Anordnung nach einem der Ansprüche 9 bis 14,
dadurch gekennzeichnet,
daß die dritte Einzelkammer (8) als Absorptionskammer ausgebildet und außerhalb des Auslaßrohrs (19) mit einem Schallschluckstoff (24) ausgefüllt ist.

16. Schalldämpfer-Anordnung nach Anspruch 15,
dadurch gekennzeichnet,
daß die zweite Einzelkammer (7) eine größere Längserstreckung als die dritte Einzelkammer (8) aufweist.

17. Schalldämpfer-Anordnung nach Anspruch 15 oder 16,
dadurch gekennzeichnet,
daß die ersten mantelseitigen Durchgangsöffnungen (20) einen größeren Durchmesser als die zweiten mantelseitigen Durchgangsöffnungen (21) besitzen.

18. Schalldämpfer-Anordnung nach einem der Ansprüche 15 bis 17,
dadurch gekennzeichnet,
daß die ersten und zweiten mantelseitigen Durchgangsöffnungen (20, 21) rund ausgebildet sind.

19. Schalldämpfer-Anordnung nach einem der Ansprüche 15 bis 18,
dadurch gekennzeichnet,
daß die stirnseitige Einströmöffnung des Auslaßrohrs (19) im Bereich des ersten Zwischenbodens (16) liegt.

20. Schalldämpfer-Anordnung nach einem der Ansprüche 15 bis 19,
dadurch gekennzeichnet,
daß die stirnseitige Einströmöffnung des Ausgangsrohrs (19) eine sich verjüngende Einströmdrossel (25) aufweist.

21. Schalldämpfer-Anordnung nach einem der Ansprüche 15 bis 20,
dadurch gekennzeichnet,
daß der erste Zwischenboden (16) perforiert ausgebildet ist.

22. Schalldämpfer-Anordnung nach einem der Ansprüche 1 bis 14,
dadurch gekennzeichnet,
daß die dritte Einzelkammer (8) als Reflexionskammer ausgebildet ist.

23. Schalldämpfer-Anordnung nach Anspruch 22,
dadurch gekennzeichnet,
daß die dritte Einzelkammer (8) im Außenumfangsbereich der zweiten mantelseitigen Durchgangsöffnungen (21) ein Absorptionspaket mit einem koaxial zum Ausgangsrohr (19) verlaufenden, beabstandeten Überrohr (26) aufweist, wobei zwischen Überrohr (26) und Ausgangsrohr (19) eine Umfangsisolierung (27) vorgesehen ist.

24. Schalldämpfer-Anordnung nach Anspruch 23,
dadurch gekennzeichnet,
daß das Überrohr (26) Perforationen aufweist.

25. Schalldämpfer-Anordnung nach einem der Ansprüche 22 bis 24,
dadurch gekennzeichnet,
daß die erste Einzelkammer (6) mit der dritten Einzelkammer (8) über ein schalldämpferinneres Zusatzrohr (28) verbunden ist, welches sich durch die zweite Einzelkammer (7) erstreckt.

26. Schalldämpfer-Anordnung nach einem der Ansprüche 22 bis 25,
dadurch gekennzeichnet,
daß das Auslaßrohr (19) im Bereich der zweiten Einzelkammer (7) eine Querschnittsverjüngung (29) mit stetigen Übergängen aufweist.

27. Schalldämpfer-Anordnung nach einem der Ansprüche 22 bis 26,
dadurch gekennzeichnet,
daß die ersten und zweiten mantelseitigen Durchgangsöffnungen (20, 21) Langlochbohrungen sind.

28. Schalldämpfer-Anordnung nach einem der Ansprüche 1 bis 27,
dadurch gekennzeichnet,
daß das Halbschalengehäuse (4) Stabilisierungseinbuchtungen (30, 31) aufweist.

29. Schalldämpfer-Anordnung nach einem der Ansprüche 1 bis 28,
dadurch gekennzeichnet,
daß sich das Halbschalengehäuse (4) im fahrzeugmontierten Zustand quererstreckt.

## Claims

1. Silencer arrangement having a silencer (1) of multichamber design, in particular for passenger cars, having a housing (4) which is assembled from two half shells (2, 3) and in which a catalytic converter module (5) is accommodated in an integrated fashion, characterized in that the catalytic converter module (5) provided with an outflow side which opens on one side into the silencer housing forms a silencer system separating bulkhead and subdivides the half-shell housing (4) into a main chamber (6, 7, 8) and an additional chamber (10) in the form of a resonator chamber or a Helmholtz resonator, the chambers being interconnected via at least one connecting channel (10) integrally formed in the half-shell housing (4).

2. Silencer arrangement according to Claim 1, characterized in that the catalytic converter module (5) is fastened in the half-shell housing (4) by self-closure and/or by welding.

3. Silencer arrangement according to Claim 1 or 2, characterized in that the cross section of the half-shell housing (4) is essentially the same along the catalytic converter module (5), it being possible for catalytic converter modules of the same cross section to be inserted in a self-closed fashion into the half-shell housing (4) with a different monolith length.

4. Silencer arrangement according to one of Claims 1 to 3, characterized in that on the side of the additional chamber (9) the catalytic converter module (5) has a sloping inlet funnel (11), and on the side of the main chamber (6, 7, 8) it has an open outlet flow side (12), that is to say one without a funnel.

5. Silencer arrangement according to Claim 4, characterized in that the sloping inlet funnel (11) extends through an envelope opening (13) in the half-shell housing (4) and is sealingly fixed in this envelope opening (13).

6. Silencer arrangement according to Claim 5, characterized in that the sloping inlet funnel (11) has a short, preferably bent joining pipe length (14) which can be connected to an exhaust-gas turbocharger or directly to an engine, in particular a rear engine.

7. Silencer arrangement according to one of Claims 4 to 6, characterized in that the monolithic envelope of the catalytic converter module (5) has a peripheral insulation (15) for mounting in the half-shell housing (4), while the sloping inlet funnel (11) is constructed without an additional insulating layer.

8. Silencer arrangement according to one of Claims 1 to 7, characterized in that the elongated main chamber, which essentially has the same cross section, is subdivided into three individual chambers (6, 7, 8) by two mutually spaced-apart intermediate bulkheads (16, 17), wherein in the axial or longitudinal direction of the main chamber the first individual chamber (6) extends between the catalytic converter module (5) and the first intermediate bulkhead (16), the second individual chamber (7) extends between the first intermediate bulkhead (16) and the second intermediate bulkhead (17), and the third individual chamber (8) extends between the second intermediate bulkhead (17) and a small-side end (18) of the half-shell housing (4).

9. Silencer arrangement according to Claim 8, characterized in that the first individual chamber (6) is connected to an outlet pipe (19) in the interior of the silencer which extends to the outside through the second individual chamber (7), the third individual chamber (8) and the associated small-side end (18) of the half-shell housing (4).

10. Silencer arrangement according to Claim 9, characterized in that the outlet pipe (19) in the interior of the half-shell housing (4) extends essentially parallel to the longitudinal axis of the half-shell housing.

11. Silencer arrangement according to Claim 9, characterized in that the outlet pipe (19) in the interior of the half-shell housing (4) extends at a tilt angle to the longitudinal axis of the half-shell housing.

12. Silencer arrangement according to one of Claims 9 to 11, characterized in that the outlet pipe (19) has first envelope-side passage openings (20) in the region of the second individual chamber (7), and second envelope-side passage openings (21) in the region of the third individual chamber (8).

13. Silencer arrangement according to Claim 12, characterized in that the second envelope-side passage openings (21) are provided on the outside with peripheral insulation (23).

14. Silencer arrangement according to one of Claims 1 to 13, characterized in that the first and the second individual chambers (6, 7) are constructed as resonator chambers.

15. Silencer arrangement according to one of Claims 9 to 14, characterized in that the third individual chamber (8) is constructed as an absorption chamber and is filled up outside the outlet pipe (19) with a sound-absorbing material (24).

16. Silencer arrangement according to Claim 15, characterized in that the second individual chamber (7) has a greater longitudinal extent that the third individual chamber (8).

17. Silencer arrangement according to Claim 15 or 16, characterized in that the first envelope-side passage openings (20) have a greater diameter than the second envelope-side passage openings (21).

18. Silencer arrangement according to one of Claims 15 to 17, characterized in that the first and second envelope-side passage openings (20, 21) are of round construction.

19. Silencer arrangement according to one of Claims 15 to 18, characterized in that the small-side inflow opening of the outlet pipe (19) is situated in the region of the first intermediate bulkhead (16).

20. Silencer arrangement according to one of Claims 15 to 19, characterized in that the small-side inflow opening of the outlet pipe (19) has a tapering inflow constriction (25).

21. Silencer arrangement according to one of Claims 15 to 20, characterized in that the first intermediate bulkhead (16) is of perforated construction.

22. Silencer arrangement according to one of Claims 1 to 14, characterized in that the third individual chamber (8) is constructed as a resonator chamber.

23. Silencer arrangement according to Claim 22, characterized in that in the outer peripheral region of the second envelope-side passage openings (21) the third individual chamber (8) has an absorption packet with a spaced overpipe (26) running coaxially with the outlet pipe (19), a peripheral insulation (27) being provided between the overpipe (26) and outlet pipe (19).

24. Silencer arrangement according to Claim 23, characterized in that the overpipe (26) has perforations.

25. Silencer arrangement according to one of Claims 22 to 24, characterized in that the first individual chamber (6) is connected to the third individual chamber (8) via an additional pipe (28) in the interior of the silencer which extends through the second individual chamber (7).

26. Silencer arrangement according to one of Claims 22 to 25, characterized in that in the region of the second individual chamber (7) the outlet pipe (19) has a cross-sectional taper (29) with smooth transitions.

27. Silencer arrangement according to one of Claims 22 to 26, characterized in that the first and second envelope-side passage openings (20, 21) are oblong bores.

28. Silencer arrangement according to one of Claims 1 to 27, characterized in that the half-shell housing (4) has stabilization bays (30, 31).

29. Silencer arrangement according to one of Claims 1 to 28, characterized in that the half-shell housing (4) extends transversely in the state mounted on the vehicle.

## Revendications

1. Ensemble de silencieux avec un silencieux (1) du type à plusieurs chambres, notamment pour des voitures particulières, comprenant un carter (4) constitué de deux demi-coques (2, 3) et dans lequel est reçu un module de catalyseur (5) intégré,
**caractérisé** en ce que le module de catalyseur (5), pourvu d'un côté d'évacuation ouvert d'un côté dans le carter de silencieux, constitue un fond séparateur de système de silencieux et divise le carter (4) à demi-coques en une chambre principale (6, 7, 8) et une chambre auxiliaire (9) sous la forme d'une chambre de résonateur ou encore d'un résonateur de Helmholtz, les chambres étant mutuellement reliées par au moins un canal de liaison (10) formé dans le carter (4) à demi-coques.

2. Ensemble de silencieux selon la revendication 1, **caractérisé** en ce que le module de catalyseur (5) est fixé dans le carter (4) à demi-coques par engagement positif et/ou par soudage.

3. Ensemble de silencieux selon la revendication 1 ou 2, **caractérisé** en ce que la section du carter (4) à demi-coques est essentiellement constante le long du module de catalyseur (5), des modules de catalyseur de section identique mais de longueurs de monolithe différentes pouvant être insérées en engagement positif dans le carter (4) à demi-coques.

4. Ensemble de silencieux selon une des revendications 1 à 3, **caractérisé** en ce que le module de catalyseur (5) présente du côté de la chambre auxiliaire (9) une tulipe d'admission oblique (11) et, du côté de la chambre principale (6, 7, 8), un côté d'évacuation ouvert, c'est-à-dire dépourvu de tulipe, (12).

5. Ensemble de silencieux selon la revendication 4, **caractérisé** en ce que la tulipe d'admission oblique (11) s'étend à travers une ouverture (13) de l'enveloppe du carter (4) à demi-coques et est immobilisée en étanchéité dans cette ouverture (13).

6. Ensemble de silencieux selon la revendication 5, **caractérisé** en ce que la tulipe d'admission oblique (11) présente un court manchon de raccordement (14), de préférence coudé, qui peut être raccordé à un turbocompresseur à gaz d'échappement ou directement à un moteur, notamment un moteur arrière.

7. Ensemble de silencieux selon une des revendications 4 à 6, **caractérisé** en ce que l'enveloppe de monolithe du module de catalyseur (5) présente pour un montage dans le carter (4) à demi-coques une isolation périphérique (15), tandis que la tulipe d'admission oblique (11) est réalisée sans couche isolante supplémentaire.

8. Ensemble de silencieux selon une des revendications 1 à 7, **caractérisé** en ce que la chambre principale oblongue, présentant une section essentiellement constante, est divisée par deux fonds intermédiaires (16, 17) distants l'un de l'autre en trois chambres individuelles (6, 7, 8), la première chambre individuelle (6) s'étendant, dans la direction axiale ou encore longitudinale de la chambre principale, entre le module de catalyseur (5) et le premier fond intermédiaire (16), la deuxième chambre individuelle (7) s'étendant entre le premier fond intermédiaire (16) et le deuxième fond intermédiaire (17), et la troisième chambre individuelle (8) s'étendant entre le deuxième fond intermédiaire (17) et une extrémité frontale (18) du carter (4) à demi-coques.

9. Ensemble de silencieux selon la revendication 8, **caractérisé** en ce que la première chambre individuelle (6) est raccordée à un tuyau d'évacuation (19) interne au silencieux, qui s'étend vers l'extérieur en traversant la deuxième chambre individuelle (7), la troisième chambre individuelle (8) et l'extrémité frontale correspondante (18) du carter (4) à demi-coques.

10. Ensemble de silencieux selon la revendication 9, **caractérisé** en ce que le tuyau d'évacuation (19) s'étend à l'intérieur du carter (4) à demi-coques essentiellement parallèlement à l'axe longitudinal du carter à demi-coques.

11. Ensemble de silencieux selon la revendication 9, **caractérisé** en ce que le tuyau d'évacuation (19) s'étend à l'intérieur du carter (4) à demi-coques sous un angle d'inclinaison par rapport à l'axe longitudinal du carter à demi-coques.

12. Ensemble de silencieux selon une des revendications 9 à 11, **caractérisé** en ce que le tuyau d'évacuation (19) présente sur son enveloppe des premières ouvertures débouchantes (20) dans la région de la deuxième chambre individuelle (7) et des secondes ouvertures débouchantes (21) dans la région de la troisième chambre individuelle (8).

13. Ensemble de silencieux selon la revendication 12, **caractérisé** en ce que les secondes ouvertures débouchantes d'enveloppe (21) sont pourvues extérieurement d'une isolation périphérique (23).

14. Ensemble de silencieux selon une des revendications 1 à 13, **caractérisé** en ce que la première chambre individuelle (6) et la deuxième chambre individuelle (7) sont conçues comme chambres de réflexion.

15. Ensemble de silencieux selon une des revendications 9 à 14, **caractérisé** en ce que la troisième chambre individuelle (8) est conçue comme chambre d'absorption et est remplie, en dehors du tuyau d'évacuation (19), d'un matériau (24) absorbant les sons.

16. Ensemble de silencieux selon la revendication 15, **caractérisé** en ce que la deuxième chambre individuelle (7) présente une plus grande étendue longitudinale que la troisième chambre individuelle (8).

17. Ensemble de silencieux selon la revendication 15 ou 16, **caractérisé** en ce que les premières ouvertures débouchantes d'enveloppe (20) possèdent un plus grand diamètre que les secondes ouvertures débouchantes d'enveloppe (21).

18. Ensemble de silencieux selon une des revendications 15 à 17, **caractérisé** en ce que les premières et secondes ouvertures débouchantes d'enveloppe (20, 21) sont réalisées circulaires.

19. Ensemble de silencieux selon une des revendications 15 à 18, **caractérisé** en ce que l'ouverture d'admission frontale du tuyau d'évacuation (19) se trouve dans la région du premier fond intermédiaire (16).

20. Ensemble de silencieux selon une des revendications 15 à 19, **caractérisé** en ce que l'ouverture d'admission frontale du tuyau d'évacuation (19) présente un étranglement d'admission (25) allant en se rétrécissant.

21. Ensemble de silencieux selon une des revendications 15 à 20, **caractérisé** en ce que le premier fond intermédiaire (16) est réalisé perforé.

22. Ensemble de silencieux selon une des revendications 1 à 14, **caractérisé** en ce que la troisième chambre individuelle (8) est conçue comme chambre de réflexion.

23. Ensemble de silencieux selon la revendication 22, **caractérisé** en ce que la troisième chambre individuelle (8) présente, dans la région périphérique extérieure des secondes ouvertures débouchantes d'enveloppe (21), un groupe d'absorption avec un tuyau de recouvrement (26) s'étendant coaxialement à distance du tuyau d'évacuation (19), une isolation périphérique (27) étant prévue entre le tuyau de recouvrement (26) et le tuyau d'évacuation (19).

24. Ensemble de silencieux selon la revendication 23, **caractérisé** en ce que le tuyau de recouvrement (26) présente des perforations.

25. Ensemble de silencieux selon une des revendications 22 à 24, **caractérisé** en ce que la première chambre individuelle (6) est reliée à la troisième chambre individuelle (8) au moyen d'un tuyau auxiliaire (28) interne au silencieux, tuyau qui s'étend à travers la deuxième chambre individuelle (7)

26. Ensemble de silencieux selon une des revendications 22 à 25, **caractérisé** en ce que le tuyau d'évacuation (19) présente dans la région de la deuxième chambre individuelle (7) un rétrécissement de section (29) à transitions progressives.

27. Ensemble de silencieux selon une des revendications 22 à 26, **caractérisé** en ce que les premières et secondes ouvertures débouchantes d'enveloppe (20, 21) sont des perçages en forme de trous oblongs.

28. Ensemble de silencieux selon une des revendications 1 à 27, **caractérisé** en ce que le carter (4) à demi-coques présente des anfractuosités de stabilisation (30, 31).

29. Ensemble de silencieux selon une des revendications 1 à 28, **caractérisé** en ce que le carter (4) à demi-coques s'étend transversalement à l'état monté dans le véhicule.
